# EUROPEAN PATENT APPLICATION

(11) **EP 3 435 049 A1**
(43) Date of publication of application: **30.01.2019**
(21) Application number: 18163034.4
(22) Date of filing: 21.03.2018
(51) Int. Cl.: G01K 1/14, G01K 13/02

(54) **THERMAL MONITORING OF A POWER DEVICE**

(71) Applicant: ABB Schweiz AG, 5400 Baden (CH)
(72) Inventor: LANERYD, Tor, 745 93 Enköping (SE); OLSSON, Carl-Olof, 722 14 Västerås (SE); GUSTAFSSON, Andreas, 771 34 Ludvika (SE)
(74) Representative: Savela, Reino Aleksi

(57) **Abstract**

The present invention relates to a thermal monitoring system for a power device (1). The power device is submerged in a cooling liquid inside a container (2), and the cooling liquid being arranged to circulate through a cooling device (3) outside the container, the thermal monitoring system comprising a control unit (6) in communication with a bulk bottom liquid sensor (5) arranged to measure an indication of a bulk bottom liquid temperature of the cooling liquid during operation, wherein the control unit is configured to estimate a life span of the power device based on the measured bulk bottom liquid temperature. A method, power transformer system, computer program and computer program product thereof are also presented.

## Description

### TECHNICAL FIELD

The invention relates to a thermal monitoring system for a power device, and a method, a computer program and a computer program product thereof.

### BACKGROUND

High temperatures in power transformers cause ageing of the dielectric insulation materials and may cause expensive transformer failure. In particular, the hot spot temperature of the transformer windings is a critical temperature. Thermal monitoring systems are often installed to control that temperature levels are within acceptable limits during set up. Possible thermal models employed are typically thereafter based on loading guides.

The hot spot temperature can be measured directly using fiber optic sensors, but installation is expensive and can only be performed during manufacturing.

### SUMMARY

An object of the present invention is to enable thermal monitoring of a power device during operation.

According to a first aspect there is presented a thermal monitoring system for a power device. The power device is submerged in a cooling liquid inside a container, and the cooling liquid being arranged to circulate through a cooling device outside the container, the thermal monitoring system comprising a control unit in communication with a bulk bottom liquid sensor arranged to measure an indication of a bulk bottom liquid temperature of the cooling liquid during operation, wherein the control unit is configured to estimate a life span of the power device based on the measured bulk bottom liquid temperature.

By measuring an indication of the bottom bulk liquid temperature during operation, an estimate of the life span of the power device is enabled, which can be used to avoid expensive transformer failure due to insulation failure.

The cooling liquid may be a dielectric liquid with Prandtl number above 20, preferably above 50, or more preferably over 100, in the temperature range of operation of the power device.

The life span may be estimated based on the time history of the bulk bottom liquid temperature.

The thermal monitoring system may further comprise a current sensor representing the current through the power device, wherein the current sensor is connected to the control unit and the life span is estimated further based on the measured current.

The thermal monitoring system may further comprise a top liquid sensor connected to the control unit, wherein the life span is estimated further based on the measured top oil temperature.

The control unit may further be configured to control the cooling device based on the bulk bottom liquid temperature.

The cooling liquid may be arranged to circulate in a pipe between the container and the cooling device, which pipe comprises a bushing downstream the cooling device, and wherein the bulk bottom liquid sensor is arranged to measure the indication of the bulk bottom liquid temperature through the bushing, and wherein the bulk bottom liquid sensor comprises a sensing region extending across the pipe.

The cooling liquid may be arranged to circulate in a pipe between the container and the cooling device, which thermal monitoring system comprises a static mixer in the pipe directly upstream the bulk bottom liquid sensor.

According to a second aspect there is presented a method for thermal monitoring of a power device during operation. The power device is submerged in a cooling liquid inside a container, and the cooling liquid being arranged to circulate through a cooling device outside the container, the method comprising measuring an indication of a bulk bottom liquid temperature of the cooling liquid, and estimating a life span of the power device based on the measured bulk bottom liquid temperature.

The life span may be estimated based on the time history of the bulk bottom liquid temperature.

The method may further comprise controlling the cooling device based on the measured bulk bottom liquid temperature.

The cooling liquid may circulate in a pipe between the container and the cooling device, which pipe comprises a bushing downstream the cooling device, and wherein a bulk bottom liquid sensor is arranged in the pipe through the bushing and measures the indication of the bulk bottom liquid temperature, and wherein the bulk bottom liquid sensor comprises a sensing region extending across the pipe.

According to a third aspect there is provided a power transformer system. The power transformer system comprising a power transformer submerged in a cooling liquid inside a container, a cooling device connected to the container through a pipe, wherein the cooling liquid is arranged to circulate through the cooling device outside the container, a bulk bottom liquid sensor, and a control unit, the control unit being in connection with the bulk bottom liquid sensor which is arranged to measure an indication of a bulk bottom liquid temperature of the cooling liquid, and wherein the control unit is configured to estimate a life span of the power transformer based on the measured bulk bottom liquid temperature.

According to a fourth aspect there is provide a computer program for thermal monitoring of a power device during operation. The power device is submerged in a cooling liquid inside a container, and the cooling liquid being arranged to circulate through a cooling device outside the container, the computer program comprising computer program code which, when run on a control unit, causes the control unit to measure an indication of a bulk bottom liquid temperature of the cooling liquid, and to estimate a life span of the power device based on the measured bulk bottom liquid temperature.

A computer program product comprising a computer program and a computer readable storage means on which the computer program is stored is also presented.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig. 1 schematically illustrates a power device with a thermal cooling system;
Fig. 2 schematically illustrates a conventional temperature sensor;
Fig. 3 schematically illustrates a modified temperature sensor according to prior art;
Fig. 4 schematically illustrates a conventional sensor assembly through a pipe wall Pete's plug;
Fig. 5 schematically illustrates a temperature profile in a pipe;
Fig. 6 schematically illustrates a velocity profile in the pipe shown in Fig. 4;
Fig. 7 schematically illustrates a sensor concept according to an embodiment presented herein;
Fig. 8 schematically illustrates a sensor concept according to an embodiment presented herein;
Fig. 9 schematically illustrates flow mixing with the use of a static mixer according to an embodiment presented herein; and
Fig. 10 illustrates a schematic flow chart of an embodiment presented herein.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

By knowing the exact temperature level of a power device, the remaining life time of the power device can be better predicted and expensive failures can be avoided. Thus, a thermal monitoring system can be used to track the temperature level of the power device during operation. Such a thermal monitoring system may also act as a control system to take action when certain conditions occur, for example to start a fan or a pump, or to limit the current through the power device.

The thermal monitoring system can be based on temperature measurements of the power device. However, it is complicated and expensive to measure temperatures at the actual location of a hotspot of e.g. a power transformer submerged in a cooling liquid. The hotspot temperature may instead be calculated based on a thermal model and a different temperature measurement, such as a measurement of the tank top oil temperature. Known thermal models are typically based on electric circuit analogies with thermal impedance based on empirical data from heat run tests or the power device during operation. Unless calibrated with fibre optic measurement, such models are risk being inaccurate. Even if a fibre optic sensor is installed, it may be positioned at a different location than the actual hotspot and the model will then again give an erroneous value. Furthermore, the hotspot may change position during operation depending on loading curves, cooling control and other external parameters. In such case, the life time expectancy based on ageing of insulation material should be calculated using a time average in all points and not only the hotspot location for certain steady state conditions.

Reasons for not installing sensors everywhere in the transformer include the cost of the sensor, the cost of the installation, and the adverse effect on reliability by introducing additional points of failure. Even if the cost of each sensor and the cost of each installation are relatively low, there may be a large number of locations where temperature information is of interest and the accumulated cost is high. Another reason to avoid installing a sensor near the hotspot is that the sensor itself may block the access of the cooling fluid and cause temperature increase.

Knowledge of the temperature of liquid entering winding cooling ducts of a power transformer, denoted as bottom oil temperature, would be advantageous in order to estimate the winding hot spot temperature during transient conditions. However, the bottom oil temperature is difficult to measure, and temperature measurement of the liquid in a packet in the top of the tank, measuring a top oil temperature, is thus often deemed sufficient. A dynamic thermal model that uses bottom oil temperature may however be used for thermal monitoring of the power transformer.

The power device may e.g. be a power transformer, a power switch, a power converter or an electrical motor, or the like. The power device is a heat-generating component within an enclosure or container, e.g. a tank, filled with a cooling liquid, preferably a dielectric liquid such as e.g. mineral oil, natural esters or synthetic esters, for transporting heat from the heat-generating component by means of circulation of the cooling liquid which is in contact with the heat-generating component.

The cooling liquid may circulate by natural circulation, or by forced circulation by means of a circulation pump. The cooling liquid may e.g. be cooled by means of being passed through a cooling device such as a heat-exchanger, e.g. a liquid-liquid heat-exchanger or a gas-liquid heat-exchanger.

The power device is in accordance with the present invention monitored, and possibly also controlled, by a thermal monitoring system.

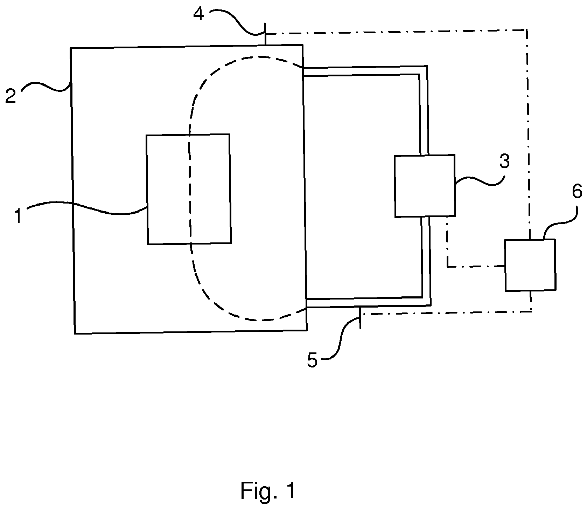

An embodiment of a thermal monitoring system is presented with reference to Fig. 1. A power device 1 is submerged in a cooling liquid in a container 2. The container 2 is connected to a cooling device 3, arranged outside the container 2. The connection is e.g. through a pipe, connected at a high position on the container to allow warm cooling liquid to leave the container, and connected a low position on the container to allow cold cooling liquid to re-enter the container. The container may be provided with a top liquid sensor 4, e.g. positioned on the top of the container 2, to measure top temperature indications for the power device 1. The system may be provided with a bulk bottom liquid sensor 5 in the pipe downstream the cooling device 3. The thermal monitoring system also comprises a control unit 6, arranged to received measurements of bulk bottom liquid temperature, as indicated by dash-dotted lines. The control unit 6 may also receive signals from the top liquid sensor 4 and communicate with the cooling device 3.

The bottom oil temperature is typically measured at the bottom header of the cooling equipment. When radiators are used in the cooling device, the flow rate is relatively small and when the dielectric liquid has a high Prandtl number (about 20-100), then the velocity and temperature distribution in the header is strongly non-uniform. With the use of some more environmental cooling liquids, the Prandtl number may even be in the order of 100-1000. In the development of calculation models for the temperature rise of power transformers it has been found that there is often a large difference between the calculated and the measured value of the bottom oil temperature.

The bottom oil temperature may be measured with low accuracy at the external surface of the bottom pipe. Measuring of the bottom oil temperature during tests may be provided by inserting an encapsulated thermometer through a bushing in the bottom pipe. The tip of the thermometer, where the sensor is located, should be placed in the centre of the pipe. This is adjusted manually during the preparations for a temperature rise test.

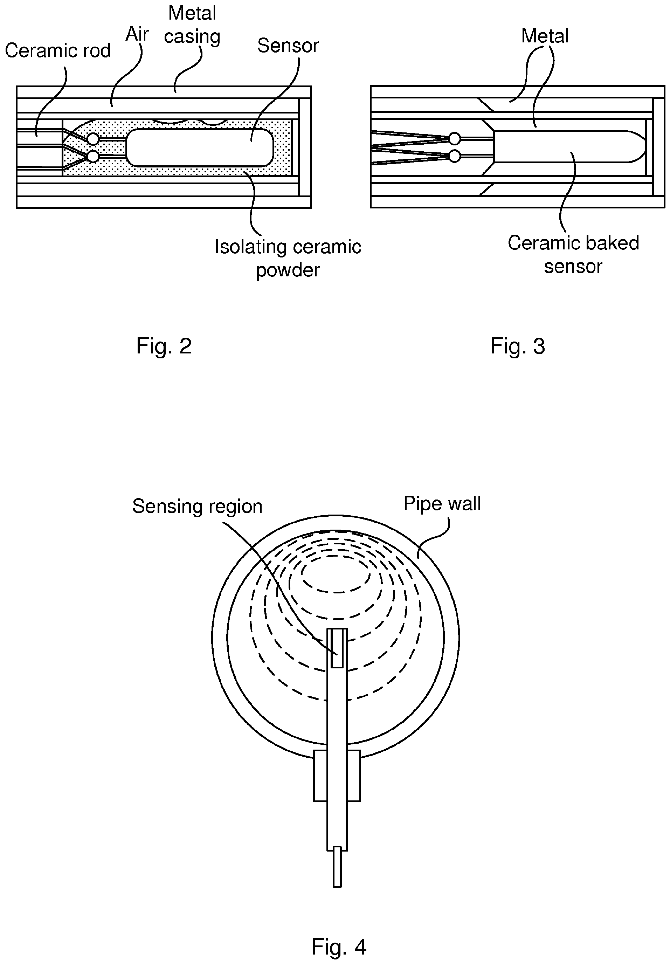

Fig. 2 illustrates a conventional temperature sensor, wherein a sensor is embedded in an insulating ceramic powder. Wirings to the sensor are fixed in a ceramic rod, which together with the embedded sensor, are within a metal casing insulated through an air gap. Fig. 3 illustrates a conventional, modified temperature sensor, wherein a ceramic baked sensor is embedded in metal, without air gap insulation.

Fig. 4 illustrates a conventional sensor assembly having a small sensing region positioned in the centre of the pipe, through the pipe wall. The temperature distribution is non-uniform in the cross section of the pipe, which is illustrated in dashed lines.

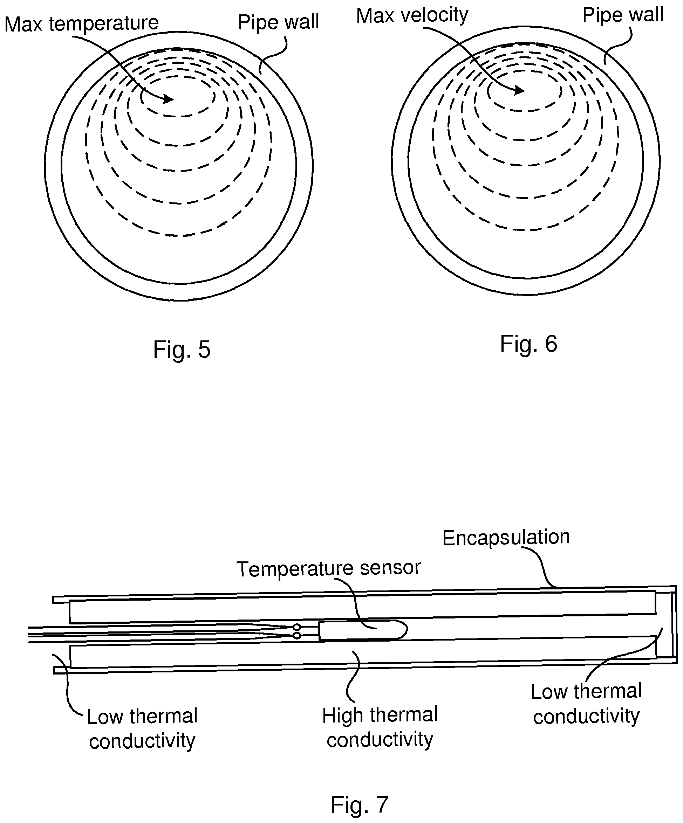

At low flow rates there could be a difference of approximately 20 K between the hottest point of the cooling fluid and the cooling fluid close to the pipe wall, which is illustrated with temperature profile in Fig. 5. Further, the velocity distribution is also non-uniform with the maximum velocity slightly above the centre line of the pipe as illustrated with velocity profile in Fig. 6. The temperature that ideally should be measured is the so-called bulk temperature which is the velocity averaged cooling liquid temperature.

A hypothetical way to obtain the bulk temperature of the oil is to measure the temperature as well as the velocity at many points in the cross section and calculate the bulk temperature. This could be accomplished for research purpose but might be difficult in the real test situation since many sensors would be needed and installation of the sensors might be complicated.

A single sensor may instead be used to measure the approximate bulk temperature with a sensor connected to a material with high thermal conductivity, as illustrated in Fig. 7, that extends the entire diameter of the pipe. At the tip of the sensor assembly a material with low thermal conductivity may be placed in order to allow the tip of the sensor assembly to be in physical contact with the inner wall of the pipe without any significant heat flow between the tip and the pipe wall that otherwise could cause an unnecessary error in the measured temperature. At the bottom end of the sensor assembly inside the pipe another part made of a material having low thermal conductivity may be placed in order to minimize the heat flux along the sensor assembly. Further, the wires of the temperature sensor may be encapsulated in a material that preferably has low thermal conductivity and mechanical properties that allow the sensor assembly to be handled in the same way as conventional sensors are handled today.

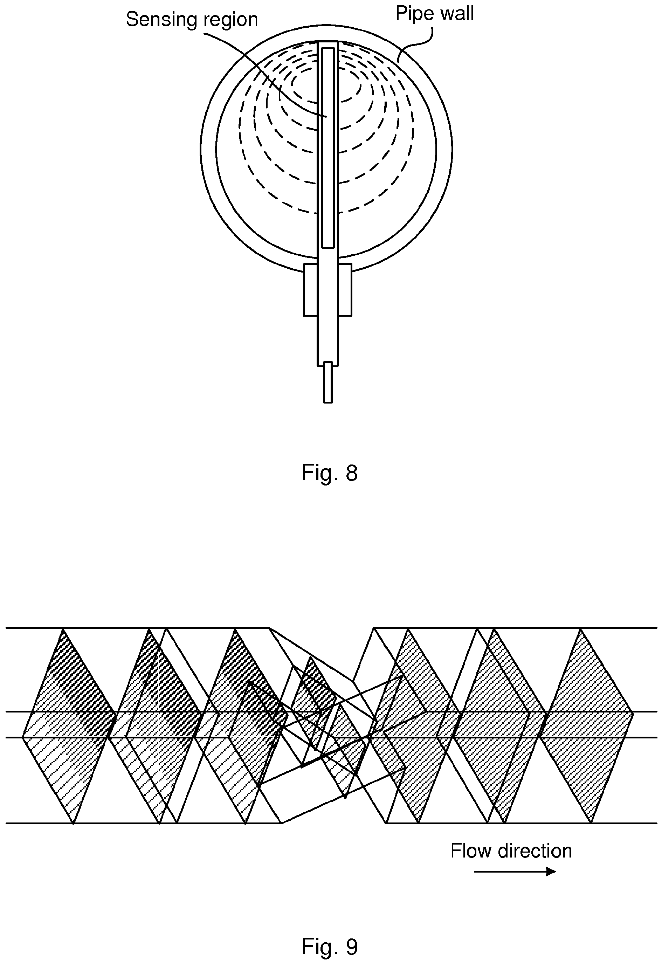

Fig. 8 illustrates the use of a bulk temperature sensor, as illustrated in Fig. 7, having a sensing region extending essentially across the entire diameter of the pipe. Apart from providing a better estimate of the bulk temperature in the pipe compared to conventional sensors, installation thereof is greatly facilitated by positioning the sensor assembly in contact with the pipe wall instead of positioning a small sensing region in the centre of the pipe.

The difference between the true bulk temperature and the temperature measured with a sensor assembly as described with reference to Figs. 7 and 8 may be estimated using simulations or measurements for various distributions of temperature and velocity in the pipe, and from such data correction factors may be derived to further improve the accuracy in the measurement of bottom oil temperature of power transformers.

With improved bulk bottom temperature measurements, the measurement may not be used only for test runs of the cooling temperature, but are used for bulk bottom temperature measurements during operation of the power device, particularly for power transformers. With an integration over time of the estimation of the bulk bottom temperature, an estimation of the life span of the power device is improved.

An alternative way to obtain the bulk temperature is if the cooling liquid flow in the pipe downstream a cooling device is led through an adiabatic device where the cooling liquid is well-stirred to get a uniform temperature in the pipe. A static mixer as shown in Fig. 9 may e.g. be used, even for a low pressure drop cooling system without a circulation pump. With the uses of such a static mixer a conventional temperature sensor through a Pete's plug may be positioned in an arbitrary position within the pipe.

The advantage of improving the estimation of the bulk bottom temperature is greater the higher viscosity the cooling liquid has. Natural and synthetic esters typically have a higher viscosity than conventional mineral oil. Silicone oil typically has even higher viscosity.

An embodiment of a thermal monitoring system for a power device is presented with reference to Fig. 1. The power device 1 is submerged in a cooling liquid inside a container 2, and the cooling liquid being arranged to circulate through a cooling device 3 outside the container, the thermal monitoring system comprising a control unit 6 in communication with a bulk bottom liquid sensor 5 arranged to measure an indication of a bulk bottom liquid temperature of the cooling liquid during operation, wherein the control unit is configured to estimate a life span of the power device based on the measured bulk bottom liquid temperature.

The cooling liquid may be a dielectric liquid with Prandtl number above 20, preferably above 50, or more preferably over 100, in the temperature range of operation of the power device.

The life span may be estimated with the knowledge of temperature at the hot spot integrated over time. Other factors such as moisture content, oxygen content, or trace amounts of other dissolved gases may also influence the ageing of the insulation material. A thermal monitoring system may estimate the influence of these factors through dedicated sensors.

The control unit may further be configured to control the cooling device based on the bulk bottom liquid temperature.

The cooling liquid may be arranged to circulate in a pipe between the container and the cooling device, and wherein the bulk bottom liquid sensor is arranged to measure the indication of the bulk bottom liquid temperature through the pipe wall, and wherein the bulk bottom liquid sensor comprises a sensing region extending across the pipe.

The cooling liquid may be arranged to circulate in a pipe between the container and the cooling device, which thermal monitoring system comprises a static mixer in the pipe directly upstream the bulk bottom liquid sensor.

The thermal monitoring system may further comprise a top liquid sensor 4 connected to the control unit, wherein the control unit further is configured to control the cooling device based on temperature measurements from the top liquid sensor.

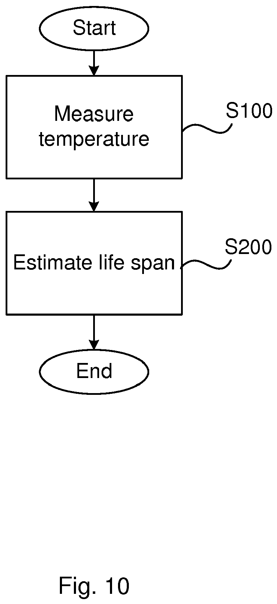

An embodiment of a method for thermal monitoring of a power device during operation is presented with reference to Fig. 10. The power device 1 is submerged in a cooling liquid inside a container 2, and the cooling liquid is arranged to circulate through a cooling device 3 outside the container, and the method comprises measuring S100 an indication of a bulk bottom liquid temperature of the cooling liquid, and estimating S110 a life span of the power device based on the measured bulk bottom liquid temperature.

The life span may be estimated by integrating the bulk bottom liquid temperature over time.

The method may further comprise controlling the cooling device based on the measured bulk bottom liquid temperature.

The cooling liquid may circulate in a pipe between the container and the cooling device, which pipe comprises a bushing downstream the cooling device, and wherein a bulk bottom liquid sensor is arranged in the pipe through the bushing and measures the indication of the bulk bottom liquid temperature, and wherein the bulk bottom liquid sensor comprises a sensing region extending across the pipe.

The cooling liquid may circulate in a pipe between the container and the cooling device, and is mixed in a static mixer directly upstream a bulk bottom liquid sensor arranged through a bushing in the pipe.

The method may further comprise controlling the cooling device based on a measured top liquid temperature.

An embodiment of a power transformer system is presented with reference to Fig. 1. The power transformer system comprises a power transformer 1 submerged in a cooling liquid inside a container 2, a cooling device 3 connected to the container through a pipe, wherein the cooling liquid is arranged to circulate through the cooling device 3 outside the container, a bulk bottom liquid sensor 5, and a control unit 6, the control unit in communication with the bulk bottom liquid sensor which is arranged to measure an indication of a bulk bottom liquid temperature of the cooling liquid, and wherein the control unit is configured to estimate a life span of the power transformer based on the measured bulk bottom liquid temperature.

An embodiment of a computer program for thermal monitoring of a power device during operation is presented. The power device 1 is submerged in a cooling liquid inside a container 2, and the cooling liquid is arranged to circulate through a cooling device 3 outside the container, the computer program comprises computer program code which, when run on a control unit, causes the control unit to measure S100 an indication of a bulk bottom liquid temperature of the cooling liquid, and to estimate S110 a life span of the power device based on the measured bulk bottom liquid temperature.

A computer program product comprising a computer program and a computer readable storage means on which the computer program is stored is also presented.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A thermal monitoring system for a power device (1), the power device being submerged in a cooling liquid inside a container (2), and the cooling liquid being arranged to circulate through a cooling device (3) outside the container, the thermal monitoring system comprising a control unit (6) in communication with a bulk bottom liquid sensor (5) arranged to measure an indication of a bulk bottom liquid temperature of the cooling liquid during operation, wherein the control unit is configured to estimate a life span of the power device based on the measured bulk bottom liquid temperature.

2. The thermal monitoring system according to claim 1, wherein the cooling liquid is a dielectric liquid with Prandtl number above 20, preferably above 50, or more preferably over 100, in the temperature range of operation of the power device.

3. The thermal monitoring system according to claim 1 or 2, wherein the life span is estimated based on the time history of the bulk bottom liquid temperature.

4. The thermal monitoring system according to any one of claims 1 to 3, further comprising a current sensor representing the current through the power device, wherein the current sensor is connected to the control unit and the life span is estimated further based on the measured current.

5. The thermal monitoring system according to any one of claims 1 to 4, further comprising a top liquid sensor (4) connected to the control unit, wherein the life span is estimated further based on the measured top oil temperature.

6. The thermal monitoring system according to any one of claims 1 to 5, wherein the control unit further is configured to control the cooling device based on the bulk bottom liquid temperature.

7. The thermal monitoring system according to any one of claims 1 to 6, wherein the cooling liquid is arranged to circulate in a pipe between the container and the cooling device, which pipe comprises a bushing downstream the cooling device, and wherein the bulk bottom liquid sensor is arranged to measure the indication of the bulk bottom liquid temperature through the bushing, and wherein the bulk bottom liquid sensor comprises a sensing region extending across the pipe.

8. The thermal monitoring system according to any one of claims 1 to 6, wherein the cooling liquid is arranged to circulate in a pipe between the container and the cooling device, which thermal monitoring system comprises a static mixer in the pipe directly upstream the bulk bottom liquid sensor.

9. A method for thermal monitoring of a power device during operation, the power device (1) being submerged in a cooling liquid inside a container (2), and the cooling liquid being arranged to circulate through a cooling device (3) outside the container, the method comprising:
measuring (S100) an indication of a bulk bottom liquid temperature of the cooling liquid; and
estimating (S110) a life span of the power device based on the measured bulk bottom liquid temperature.

10. The method according to claim 9, wherein the life span is estimated based on the time history of the bulk bottom liquid temperature.

11. The method according to claim 9 or 10, further comprising controlling the cooling device based on the measured bulk bottom liquid temperature.

12. The method according to any one of claims 9 to 10, wherein the cooling liquid circulates in a pipe between the container and the cooling device, which pipe comprises a bushing downstream the cooling device, and wherein a bulk bottom liquid sensor is arranged in the pipe through the bushing and measures the indication of the bulk bottom liquid temperature, and wherein the bulk bottom liquid sensor comprises a sensing region extending across the pipe.

13. A power transformer system, comprising a power transformer (1) being submerged in a cooling liquid inside a container (2), a cooling device (3) connected to the container through a pipe, wherein the cooling liquid is arranged to circulate through the cooling device (3) outside the container, a bulk bottom liquid sensor (5), and a control unit (6), the control unit being in connection with the bulk bottom liquid sensor which is arranged to measure an indication of a bulk bottom liquid temperature of the cooling liquid, and wherein the control unit is configured to estimate a life span of the power transformer based on the measured bulk bottom liquid temperature.

14. A computer program for thermal monitoring of a power device (1) during operation, the power device being submerged in a cooling liquid inside a container (2), and the cooling liquid being arranged to circulate through a cooling device (3) outside the container, the computer program comprising computer program code which, when run on a control unit, causes the control unit to:
measure (S100) an indication of a bulk bottom liquid temperature of the cooling liquid; and
estimate (S110) a life span of the power device based on the measured bulk bottom liquid temperature.

15. A computer program product comprising a computer program as claimed in claim 14 and a computer readable storage means on which the computer program is stored.
